Europäisches Patentamt

European Patent Office

Office européen des brevets

(19)

(11) Veröffentlichungsnummer: **0 003 135**
**B1**

(12) # EUROPÄISCHE PATENTSCHRIFT

(45) Veröffentlichungstag der Patentschrift:
07.07.82

(51) Int. Cl.³: **C 08 B 9/00, D 01 F 2/00**

(21) Anmeldenummer: **79100082.1**

(22) Anmeldetag: **12.01.79**

(54) Verfahren zur Verbesserung des Lösungszustandes von Viskosen.

(30) Priorität: **17.01.78 DE 2801820**

(43) Veröffentlichungstag der Anmeldung:
**25.07.79 Patentblatt 79/15**

(45) Bekanntmachung des Hinweises auf die Patenterteilung:
**07.07.82 Patentblatt 82/27**

(84) Benannte Vertragsstaaten:
**BE DE FR GB IT NL SE**

(56) Entgegenhaltungen:
**DE-B-1 121 271**
**US-A-1 917 646**
**US-A-2 643 999**
**US-A-3 395 140**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Mayer, Reinhart, Veilchenstrasse 25, D-8420 Kelheim/Donau (DE)**

## Verfahren zur Verbesserung des Lösungszustandes von Viskosen

Bei der bekannten Herstellung von geformten Gebilden, wie z.B. Fäden, Fasern und Folien, aus Regeneratcellulose nach dem Viskoseverfahren ist es für die Wirtschaftlichkeit des Verfahrens von entscheidender Bedeutung, den spezifischen Chemikalienverbrauch auf ein Minimum zu senken. So hat es beispielsweise nicht an Versuchen gefehlt, sogenannte Sparviskosen herzustellen, d.h. verspinnbare Lösungen von Alkalicellulose-xanthogenat in verdünnter Natronlauge oder Wasser, bei denen das Alkaliverhältnis (Verhältnis des NaOH-Gehaltes zum Cellulosegehalt in Gewichtsprozenten) auf Werte von unter 0,6 gesenkt wurde und bei denen gegebenenfalls zusätzlich auch die Menge des eingesetzten Schwefelkohlenstoffes vermindert wurde.

Die Absenkung des Alkaliverhältnisses (AV) von Viskosen hat zur Folge, dass nicht nur der spezifische NaOH-Verbrauch, sondern auch der spezifische Schwefelsäureverbrauch im Spinnbadsystem sowie die Kosten für die Spinnbadregenerierung und Natriumsulfatausschleusung gesenkt werden können. Ein geringerer Schwefelkohlenstoffeinsatz, bezogen auf den Celluloseeinsatz oder die Menge der erzeugten Regeneratcellulose, führt zwangsläufig zu einer zusätzlichen Entlastung der Abluft-Reinigungsanlage.

Selbst bei der Herstellung von Viskosen ohne Einhaltung von Sparbedingungen ist die Erzeugung von homogenen Spinnlösungen ein Problem, da es selbst unter Rühren, Umpumpen oder Zerreiben nicht möglich ist, das Cellulose-xanthogenat quantitativ in den gelösten Zustand zu überführen. Es verbleiben vielmehr stets in geringem Umfang nur angequollene oder teilweise gelöste schleimige Substanzen zurück, die vor dem Verspinnen durch mehrere aufeinander folgende Filtrationen aus der hochviskosen Lösung entfernt werden müssen. Der Lösungszustand, d.h. aber im wesentlichen die Filtrierbarkeit, von Viskosen wird beispielsweise durch die Absenkung des AV zunehmend soweit verschlechtert, dass die Herstellung homogener, verspinnbarer Viskosen nur noch mit einem nicht mehr zu vertretenden Filtrationsaufwand möglich ist.

Eine Absenkung des AV von Viskosen ist weitgehend nur durch Absenkung des NaOH-Gehaltes der Alkalicellulose möglich. Eine Konzentrationsverminderung bzw. Temperaturerhöhung der benutzten Tauchlauge sowie die Ansteuerung eines höheren Abpressgrades der Alkalicellulose führt zwangsläufig zu einem schlechteren Lösungszustand der daraus erzeugten Viskose. Möglicherweise wird in der DE-OS 1 924 804 ein Verfahren beschrieben, bei dem eine Absenkung des NaOH-Gehaltes der Alkalicellulose nicht zwangsläufig zu einer Verschlechterung der Filtrierbarkeit daraus hergestellter Viskosen führt. Dieses Verfahren arbeitet jedoch mit einer zweiten Alkalisierung nach der Vorreife und ist daher nicht nur durch die zusätzlich benötigten Apparate, sondern auch durch den zusätzlichen Energiebedarf ausserordentlich aufwendig.

Es wurde nun überraschend gefunden, dass es möglich ist, unter Verwendung der üblichen Alkalisier- und Sulfidiereinrichtungen Viskosen und insbesondere auch Sparviskosen von einem ausgezeichneten Lösungszustand herzustellen, wenn das Anmaischen des Alkalicellulose-xanthogenats und/oder das eigentliche Lösen dieses Xanthogenats in verdünnter Natronlauge bzw. Wasser unter Druck erfolgt. Der Überdruck sollte dabei 1 bis 30, vorzugsweise 2 bis 15, bar betragen und 1 bis 180, vorzugsweise 15 bis 60, Minuten andauern. (Die Einheit des Druckes 1 bar entspricht 1,02 kg/cm² bzw. 14.5 psi (1b/sq in)).

Kurzzeitige Druckbehandlungen von hochkonzentrierten Xanthogelen mit Hilfe von Kalandern sind bereits aus der US-PS 2 643 999 bekannt. Das dort beschriebene Verfahren lässt sich jedoch nicht auf die Viskoseherstellung übertragen. Aufgrund der nur sehr kurzen Zeit, bei der bei einer Kalandrierung die zu behandelnde Masse unter Druck steht, wäre auch die erfindungsgemäss gefundene Verbesserung des Lösungszustandes nicht zu erreichen.

In der DE-AS 1 121 271 wird die kurzzeitige Förderung von junger Viskose unter Druck von einer Pumpe zu einer Passierzentrifuge beschrieben. Auch hier reicht die Verweilzeit nicht aus, um zu einer Verbesserung des Lösungszustandes gemäss der Erfindung zu kommen.

Gemäss der Lehre der US-PS 1 917 646 soll es möglich sein, auf die Vorreife der Alkalicellulose zu verzichten, wenn stattdessen eine chemische Umsetzung der jungen Viskose mit reinem Sauerstoff, der gegebenenfalls unter Überdruck stehen kann, durchgeführt wird. Vorzugsweise soll dabei der Sauerstoff in der Viskose emulgiert werden. Mit der Durchführung eines solchen Verfahrens sind eine Reihe von technischen Schwierigkeiten verbunden, die nur schwer beherrscht werden können. Insbesondere die erheblichen Explosionsgefahren haben eine technische Nutzung dieser chemischen Umsetzung verhindert.

Im Gegensatz zu der Lehre dieser Vorveröffentlichung ist erfindungsgemäss eine chemische Reaktion zwischen der Viskose und dem gegebenenfalls vorhandenen Druck erzeugenden Medium weder vorgesehen noch erwünscht. In Versuchen konnte beispielsweise gezeigt werden, dass ein Einsatz von Pressluft von 7 bar während des 150 min dauernden Lösens des Xanthogenats in einem Autoklav zu keinem chemischen Abbau des Cellulosemoleküls führt.

Die erfindungsgemässe Druckbehandlung sollte möglichst während des ganzen Anmaisch- und Lösevorgangs erhalten bleiben. Das ist z.B. auf einfache Weise möglich, wenn das Xanthogenat in Baratten hergestellt wurde und anschliessend in getrennten Viskoselösern mit Natronlauge oder Wasser unter Rühren und unter gleichzeitiger Druckeinwirkung gelöst wird.

Bei einigen bekannten Viskoseverfahren erfolgt das Anmaischen des Xanthogenats bereits in den Sulfidierapparaten, die meist nicht für einen entsprechenden Überdruck ausgerüstet sind. In diesen Fällen ist es zweckmässig, das angemaischte und gegebenenfalls schon teilweise gelöste Xanthogenat möglichst sofort nach Überführung in den Löseapparat oder Dissolver unter Druck und gleichzeitigem Rühren, Umpumpen und/oder Zerreiben weiter zu lösen. Allgemein kommt es darauf an, einen Überdruck während der Zeit des Anmaischens und/oder Lösens aufrechtzuerhalten, während der noch freie, nicht an die Cellulose gebundene Schwefelkohlenstoff vorliegt.

Die Erzeugung des Überdrucks kann auf verschiedene, bekannte Weisen erfolgen. Beispielsweise kann auf Lösebehälter, die die Form von Autoklaven aufweisen, Stickstoff oder ein anderes geeignetes Gas oder Gasgemisch gepresst werden. Entsprechend wirksam ist die Erzeugung des Druckes durch geeignete Fördervorrichtungen, wie z.B. Pumpen.

Je nach Beginn und Höhe des angewandten Überdruckes kann die Behandlungszeit unter Druck variieren. Beispielsweise sind feststellbare Verbesserungen des Lösungszustandes so behandelter Viskosen bereits bei einem Überdruck von z.B. 10 bar nach Zeiten von weniger als 1 Minute beobachtbar, während bei einem Überdruck von nur 2 bar entsprechende Veränderungen bei Druckbehandlungszeiten von wenigstens einer Minute feststellbar sind.

Die gefundene Verbesserung des Lösungszustandes von Viskosen nimmt mit steigendem Druck zu. Besonders gute Resultate wurden bei Überdruckwerten von 3,5 bis 10 bar und Behandlungszeiten von 15 bis 60 Minuten gefunden. Durch Drucksteigerung über 10 bar hinaus, z.B. auf 30 bar, ist eine weitere Verbesserung des Lösungszustandes zu beobachten. Da aber gleichzeitig mit steigendem Druck die Aufwendungen für die benötigten Apparate zunehmen, erscheint eine Steigerung über 30 bar Überdruck nicht mehr sinnvoll.

Eine ähnliche Abhängigkeit wurde für die Behandlungszeit gefunden. Wie bereits oben erwähnt, ist bei Anwendung hoher Drücke in einem frühen Stadium der Auflösung des Xanthogenats bereits bei Zeiten unter einer Minute ein deutlicher verbessernder Effekt zu beobachten. Die Verbesserung des Lösungszustandes kann durch Verlängerung der Überdruckbehandlung weiter verbessert werden. Eine Ausweitung über 180 Minuten ist ohne weiteres möglich, die prozentuale Verbesserung des Lösungszustandes ist dann jedoch nur noch gering.

Es wurde auch gefunden, dass es nicht erforderlich ist, den Lösevorgang durch Anwendung eines stets gleichen Überdruckes zu verbessern. Falls apparativ bedingt, können auch unterschiedliche Druckwerte angewandt werden, wobei vorzugsweise zu Beginn des Lösungsvorganges höhere Druckwerte eingehalten werden sollten. Falls gewünscht, ist auch eine intermittierende Druckbehandlung der Viskose möglich, d.h., dass die Viskose nur kurzzeitig einer Druckbehandlung ausgesetzt wird, danach auf Normaldruck entspannt und dann erneut einer Druckbehandlung, Entspannung, Druckbehandlung usw. ausgesetzt wird. Auch bei einer solchen Behandlung sollte vorzugsweise die Gesamtzeit der Druckbehandlung während des Lösevorganges zwischen einer Minute und 180 Minuten, vorzugsweise jedoch zwischen 15 und 60 Minuten, liegen.

Das geschilderte Verfahren zur Verbesserung des Lösungszustandes von Viskosen ist jedoch nicht nur auf den eigentlichen Lösungsprozess bei Sparviskosen beschränkt, sondern eignet sich insbesondere auch zur Herstellung homogener, verspinnbarer Viskosen aus schlecht aufgeschlossenen Zellstoffen und zur Verbesserung des Lösungszustandes von Viskosepartien, deren Lösungszustand durch Verfahrensfehler beeinträchtigt wurde.

Bei Einsatz von schlecht aufgeschlossenen Zellstoffen ist eine Verarbeitung nach dem erfindungsgemässen Verfahren möglich, wenn unter normalen Bedingungen – meist jedoch nicht unter Sparbedingungen – alkalisiert und sulfidiert wird und anschliessend der Lösungsvorgang nach dem erfindungsgemässen Verfahren vorgenommen wird.

Bei Viskosepartien, die eine hohe Zahl von Quellkörpern und anderen schleimigen Verunreinigungen aufweisen, ist sogar noch eine nachträgliche Verbesserung des Lösungszustandes möglich, wenn, gegebenenfalls nach Zusatz von zusätzlichem Schwefelkohlenstoff, eine erneute Lösungsbehandlung nach dem erfindungsgemässen Verfahren unter Überdruck durchgeführt wird.

Die Wirkung des erfindungsgemässen Verfahrens beruht vermutlich auf einer höheren Umsetzung des Schwefelkohlenstoffs mit der Cellulose als bei den bisher bekannten Verfahren. Der Schwefelkohlenstoff geht bekanntlich nicht nur als Xanthogenat eine Verbindung mit der Cellulose bei dem Viskoseverfahren ein. Ein Teil des Schwefelkohlenstoffs unterliegt vielmehr den bekannten Nebenreaktionen, z.B. der Bildung von Natriumtrithiocarbonat. So ist z.B. bei einer Sulfidierung und Lösung bei Normaldruck nach dem üblichen Verfahren unter Einsatz von 36 bis 37 Gew.-% Schwefelkohlenstoff, bezogen auf den Cellulosegehalt der Alkalicellulose, nur ca. 88% des eingesetzten Schwefelkohlenstoffs an die Cellulose gebunden. Verfährt man jedoch erfindungsgemäss und setzt die junge Viskose dem Druck von 7 bar aus, so erreicht man, dass 96% des eingesetzten Schwefelkohlenstoffs nach Beendigung des Lösevorganges an die Cellulose gebunden sind. Die Bestimmung des an die Cellulose gebundenen Schwefelkohlenstoffs erfolgte nach Bredée, Kolloid. Z. 94 (1941), 85. Auch bei einer nachträglichen Zugabe von Schwefelkohlenstoff werden so vermutlich mehr Xanthogenat-Gruppen gebildet, die den Lösevorgang begünstigen.

Zur Charakterisierung des Lösungszustandes wurde die Filterverstopfungskonstante gewählt.

Die Bestimmung dieser Konstante erfolgte nach Hermans und Bredée, Rec. Trav. Chim. Pays-Bas 54 (1935), 680 ff. Dabei wird die zu prüfende Viskose in ein zylindrisches Stahlgefäss eingeführt, wie es beispielsweise in «Götze, Chemiefasern nach dem Viskoseverfahren», dritte Auflage (1967), Band II, 1115, Fig. 783 beschrieben ist und bei konstantem Druck von 2,0 atü durch 3 Lagen Baumwollbatist (Gewebeeinstellung: Kette 52 Fäden/cm, Schuss 49 Fäden/cm, m²-Gewicht 84 g/m²) filtriert. Die wirksame Filterfläche beträgt bei dieser Prüffiltration 8.77 cm². Gemessen wird die Filtratmenge, die während der Filtrationszeit von 0 bis 20 Minuten ($p_1$) und in der Filtrationszeit 20 bis 60 Minuten ($p_2$) anfällt. Die Verstopfungskonstante berechnet sich dann nach der Formel

$$K_w = 100\,000 \frac{\left(2 - \dfrac{P_2}{P_1}\right)}{P_2 + P_1}$$

Vergleiche mit der betrieblichen Filtration zeigten, dass die folgenden Zuordnung der gemessenen $K_w$-Werte möglich ist.

| $K_w$-Wert | Beurteilung der Filtrierbarkeit |
|---|---|
| <300 | sehr gut |
| 300– 500 | gut |
| 500– 800 | erschwert |
| 800–1000 | schlecht |
| >1000 | praktisch nicht mehr filtrierbar |

Zur weiteren Verdeutlichung der Erfindung sollen die nachfolgenden Beispiele dienen. Zum Teil wurde auf spezielle Hinweise über die angewandten Analysenmethoden verzichtet, da diese beispielsweise in der zitierten Monographie von Götze, a.a.O., Band 2, Kapitel 42 und 43 eingehend beschrieben worden sind. Falls nicht anders vermerkt, beziehen sich Mengen und Prozentangaben auf Gewichtsmengen.

Beispiel 1:

Als Ausgangsmaterial für eine Reihe von Versuchen diente ein Buchensulfitzellstoff mit einem α-Cellulosegehalt von 91,2% und bei einem Durchschnittspolymerisationsgrad (DP) von 820. Die Bestimmung des DP erfolgte in allen Fällen mittels Emulsionsxanthogenierung nach Jayme-Wellm, Das Papier 11 (1957), 77 bis 82.

Es wurden jeweils Blätter des Zellstoffs in einer Alkalisierpresse der Firma Blaschke, Endersbach getaucht, die Tauchzeit betrug 30 Minuten bei 55 °C. Es wurde stets eine Tauchlauge mit 190 g/l NaOH und 30 g/l Hemicellulose eingesetzt. Nach dem Abpressen und Zerfasern wurde jeweils eine Alkalicellulose erhalten, die 35,0% Cellulose und 14,0% NaOH enthielt. Während der anschliessenden Vorreife der Alkalicellulose bei 55 °C und einer Vorreifezeit von 8,5 Stunden wurde der DP auf 3.05 gesenkt. Die Sulfidierung erfolgte in evakuierten Behältern während 90 Minuten bei 30 °C. Die eingesetzten Schwefelkohlenstoffmengen variierten zwischen 34 und 37%, sie sind in der nachfolgenden Tabelle aufgeführt.

Die so erhaltenen Xanthogenate wurden unterschiedlichen Lösebedingungen unterworfen. In jedem Fall wurde Wasser und verdünnte Natronlauge in einer solchen Menge zugegeben, dass der Cellulosegehalt der erzeugten Viskosen 9,0% betrugt, während der Gehalt an NaOH und damit das Alkaliverhältnis (AV) der Viskose variiert wurde.

Löseverfahren nach dem Stand der Technik.

Gelöst wurde in offenen Behältern, und zwar einmal unter Einsatz eines Propellerrührers, der mit 1.370 U./min betrieben wurde. Die Behandlungszeit betrug 2,5 bzw. 5 Stunden. Weiterhin wurden Viskosen während einer Zeit von 5 Stunden der Wirkung eines Zerreibers (Condux-Scheibenmühle) ausgesetzt.

Lösen nach dem erfindungsgemässen Verfahren.

Auch hier wurden zwei verschiedene Verfahren angewandt. Einmal erfolgte das Lösen beginnend mit dem Anmaischen in einem Autoklav, der mit einem langsam laufenden Propellerrührwerk (etwa 100 U./min) ausgestattet war. Nach der Zugabe des benötigten Wassers und der verdünnten Natronlauge wurde Stickstoff in den Autoklav gepresst. Während des gesamten Lösevorganges von 2,5 Stunden wurde ein Überdruck von 7 bar aufrechterhalten. In einer weiteren Versuchsreihe wurde zunächst mit Hilfe eines Rührers bei normalem Druck das Alkalicellulose-xanthogenat mit Wasser und Natronlauge angemaischt und anschliessend mit Hilfe einer Zahnradpumpe in einen Behälter gedrückt, der ein Überströmventil aufwies, das auf 2 bar Überdruck eingestellt war. Die aus diesem Ventil austretende Viskose lief in

| Alkaliverh. der Viskose | % CS2 | Filterverstopfungskonstanten Kw bei verschiedenen Lösebedingungen | | | | |
|---|---|---|---|---|---|---|
| | | 2,5 Std. Lösezeit unter Rühren | 5 Std. Lösezeit unter Rühren | 5 Std. Lösezeit mit Zerreiber | 2,5 Std. Lösezeit Druck nach Zahnradpumpe 2 bar | 2,5 Std. Lösezeit im Autoklaven 7 bar |
| 0,55 | 37 | 800 | 660 | 600 | 420 | 280 |
| 0,45 | 37 | 950 | 690 | 640 | 425 | 310 |
| 0,40 | 37 | 1160 | 820 | 805 | 435 | 320. |
| 0,40 | 34 | 3400 | 1800 | 1655 | 610 | 330 |

den drucklosen Anmaischbehälter zurück und gelangte mit Hilfe der Zahnradpumpe erneut in die Druckzone. Die Gesamtlösezeit betrug in diesem Fall auch 2,5 Stunden, wobei die Viskose im Mittel insgesamt 25 Minuten dem Überdruck von 2 bar ausgesetzt war.

Die unterschiedlichen Verfahrensbedingungen sowie die erhaltenen Messwerte der Filterverstopfungskonstante $K_w$ sind in der vorangehenden Tabelle zusammengefasst worden.

Aus den Messwerten der Tabelle ist eindeutig zu ersehen, dass die Anwendung eines Druckes während des Anmaischens und/oder Lösens gemäss der vorliegenden Erfindung zu einer deutlichen Verbesserungen des Lösungszustandes führt. Insbesondere ist es möglich, Viskosen unter Sparbedingungen herzustellen, die noch eine gute Filtrierbarkeit zeigen.

Beispiel 2:

Unter den gleichen Alkalisier-, Vorreife- und Sulfidierbedingungen wie im Beispiel 1 wurden aus 3 Buchensulfitzellstoffen mit unterschiedlichem α-Cellulosegehalt und Ascheanteil Alkalicellulose-Xanthogenate hergestellt, die dann wieder unter unterschiedlichen Bedingungen angemaischt und gelöst wurden. Zum Einsatz gelangten die folgenden Zellstoffe

| Bezeichnung der Zellstoffe | A | B | C |
|---|---|---|---|
| α-Cellulose-Gehalt, % | 93,2 | 90,3 | 87,8 |
| Asche, % | 0,054 | 0,11 | 0,16 |

Die erhaltenen Xanthogenate wurden mit der berechneten Menge an Wasser und verdünnter Natronlauge in einem offenen Behälter unter Einsatz eines Propellerrührers (ca. 1.370 U./min) während eines Zeitraumes von 2,5 Stunden gelöst.

In einer parallelen Versuchsreihe wurde erfindungsgemäss das Anmaischen und Lösen in einem Autoklav mit langsam laufendem Rührwerk (ca. 100 U./min) vorgenommen, wobei während der gesamten Anmaisch- und Lösezeit von 2,5 Stunden ein Überdruck von 9 bar durch Aufpressen von Pressluft aufrechterhalten wurde.

In einer dritten Versuchsreihe erfolgte das Anmaischen des Xanthogenats bei Normaldruck und unter Zuhilfenahme eines Propellerrührers. Das angemaischte Xanthogenat wurde anschliessend sofort mit Hilfe einer Zahnradpumpe in einen Raum gefördert, in dem mit Hilfe eines Druckhalteventils ein Überdruck von 9 bar aufrecht gehalten wurde. Die Grösse dieses Druckraumes war so ausgelegt, dass jeweils nur ein Teil der gesamten Viskosemenge aufgenommen werden konnte. Die junge Viskose verblieb daher nur einige Zeit in dem Druckraum und floss dann durch das Druckhalteventil wieder in den drucklosen Vorlagebehälter der Zahnradpumpe zurück, um dann erneut von der Zahnradpumpe in den Behälter gefördert zu werden. Die Gesamtlösezeit betrug auch bei dieser Versuchsreihe 2,5 Stunden, die Gesamtverweilzeit der Viskose unter einem Druck von 9 bar jedoch im Mittel nur 19 Minuten.

Es wurden jeweils Viskosen unter Einsatz von 37% Schwefelkohlenstoff und einem Alkaliverhältnis von 0,6 hergestellt. Die Cellulosekonzentration der Viskosen betrug jeweils 9,0%.

Zur Charakterisierung des Lösezustandes der verschiedenen Viskosen diente wiederum die Bestimmung der Filterverstopfungskonstante Kw. Die erhaltenen Werte sind nachfolgend zusammengestellt worden.

| Zellstoff | Filterverstopfungskonstante Kw nach | | |
|---|---|---|---|
| | 2,5 Stunden Lösezeit unter Rühren | 2,5 Stunden Lösezeit; Druck nach Zahnradpumpe 9 bar | 2,5 Stunden Lösezeit im Autoklaven 9 bar |
| A | 450 | 180 | 170 |
| B | 1210 | 360 | 280 |
| C | 1620 | 385 | 305 |

Die aus dem Zellstoff C unter Rühren bei Normaldruck während 2,5 Stunden hergestellte Viskose wurde anschliessend im Autoklav bei 9 bar Überdruck für 2,5 Stunden nachgelöst. Durch diese Massnahme konnte der Lösungszustand noch erheblich verbessert werden. Die so behandelte Viskose zeigte nach dem Nachlösen eine Filterverstopfungskonstante Kw von 370. Wurde jedoch eine solche Viskose mit einer zusätzlichen Menge von 2,0% Schwefelkohlenstoff, bezogen auf den Cellulosegehalt der Viskose, versetzt und dann einer entsprechenden Nachlösung im Autoklav bei einem Überdruck von 9 bar während einer Zeit von 2,5 Stunden ausgesetzt, so verbesserte sich der Lösungszustand weiter. Die Filterverstopfungskonstante Kw betrug dann nur noch 195.

## Patentansprüche

Patentansprüche:

1. Verfahren zur Verbesserung des Lösungszustandes von Viskosen, dadurch gekennzeichnet, dass das Anmaischen des Alkalicellulose-Xanthogenats mit verdünnter Natronlauge oder Wasser und/oder das Lösen des Xanthogenats durch Rühren, Zerreiben oder Umpumpen bei einem Überdruck von 1 bis 30 bar erfolgt und die Druckbehandlung möglichst unmittelbar nach dem Anmaischen des Xanthogenats beginnt und 1 bis 180, vorzugsweise 15 bis 60, Minuten dauert.

2. Verfahren nach Anspruch 1, dadurch gekennzeichnet, dass der Überdruck 2 bis 15, vorzugsweise 3,5 bis 10, bar beträgt.

3. Verfahren nach Anspruch 1 oder 2, dadurch gekennzeichnet, dass Viskosen von schlechtem Lösungszustand nach Zugabe von zusätzlichem Schwefelkohlenstoff einem erneuten Lösen durch Umpumpen, Rühren oder Zerreiben unterworfen werden.

**Claims**

1. A process for improving the solution state of viscoses, characterized in that the masking of the alkali cellulose xanthate with dilute sodium hydroxide solution or water and/or the dissolving of the xanthate by agitation, disintigration or pump circulation is carried out under a superatmospheric pressure of 1 tp 30 bar and the pressure treatment is started with the least possible delay after masking of the xanthate and is continued for a time of from 1 to 180, preferably 15 to 60, minutes.

2. The process as claimed in claim 1, characterized in that the superatmospheric pressure is from 2 to 15, preferably 3.5 to 10, bar.

3. The process as claimed in claim 1 or 2, characterized in that viscoses being in a poor solution state, after having added further carbon disulfide, are subjected to a renewed dissolving by pump circulation, agitations or disintegration.

**Revendications**

1. Procédé pour améliorer l'état de dissolution de viscoses, caractérisé en ce que le trempage du xanthate d'alcalicellulose s'effectue avec une solution diluée de soude ou de l'eau et/ou la dissolution du xanthate s'effectue par agitation, broyage et recyclage à la pompe sous une surpression de 1 à 30 bars, et le traitement sous pression commence aussi immédiatement que possible après le trempage du xanthate et dure 1 à 180 minutes, de préférence 15 à 60 minuten.

2. Procédé selon la revendication 1, caractérisé en ce que la surpression est de 2 à 15 bars et de préférence de 3,5 à 10 bars.

3. Procédé selon l'une des revendications 1 ou 2, caractérisé en ce que, après addition de sulfure de carbone supplémentaire, on soumet une viscose ayant un mauvais état de dissolution à une nouvelle dissolution par recyclage à la pompe, agitation ou broyage.